Europäisches Patentamt

European Patent Office

Office européen des brevets

(11) Publication number: **0 184 390**
**B1**

(12) **EUROPEAN PATENT SPECIFICATION**

(45) Date of publication of patent specification: **25.01.89**

(51) Int. Cl.⁴: **C 06 B 21/00**, B 26 D 5/34

(21) Application number: **85308666.8**

(22) Date of filing: **28.11.85**

(54) **Extrusion, conveyance and cutting system.**

(30) Priority: **28.11.84 US 675504**

(43) Date of publication of application:
**11.06.86 Bulletin 86/24**

(45) Publication of the grant of the patent:
**25.01.89 Bulletin 89/04**

(84) Designated Contracting States:
**DE FR GB SE**

(56) References cited:
**DE-A-1 561 709**
**DE-A-1 779 538**
**DE-C- 803 269**
**US-A-3 969 054**

(73) Proprietor: **HERCULES INCORPORATED**
**Hercules Plaza**
**Wilmington Delaware 19894 (US)**

(72) Inventor: **Rollyson, Richard Austin**
**Rt. 4 Box 301**
**Radford, VA 24141 (US)**
Inventor: **Wesson, Peter Daniels**
**2100B, Meadowbrook Dr.**
**Blacksburg, VA. 24060 (US)**
Inventor: **Zerwekh, Paul Samuel**
**Rt. 4 Box 263**
**Radford, VA. 24141 (US)**

(74) Representative: **De Minvielle-Devaux, Ian**
**Benedict Peter et al**
**CARPMAELS & RANSFORD 43, Bloomsbury**
**Square**
**London WC1A 2RA (GB)**

Courier Press, Leamington Spa, England.

## Description

This invention relates to methods for continuously extruding, conveying and cutting strands of solid propellants to produce so-called "stick" propellants in precise lengths.

The continuous extrusion, conveying and cutting of solid strands of propellant are well known, but can produce propellant sticks of uniform length only at relatively slow rates of extrusion. The cutting devices of British Patent 2,107,638, U.S. Patent No. 3,527,129, and German OLS 3,041,705 are typical examples.

Commercially available DC motor cutters can overcome the tendency for extreme stick length variability, but cannot provide a standard deviation of, for instance, from 0.05 cm to 0.6 cm, which may be required to meet length tolerance limits for a mean stick length of about 356 mm commonly accepted in the industry. Variations in the extrusion rate are responsible for unacceptable variations in length, even when the best available cutter and controlling microprocessor and software are used. Known methods for utilizing feedback to control the extrusion velocity are not practical for high velocity propellant extrusion.

According to the invention, a method for continuously conveying and cutting an extruded strand of a solid propellant to produce sticks of a desired length that is substantially independent of variations in strand velocity in which the extruded strand is continuously conveyed past a microprocessor-controlled cutter that cuts the strand after it receives an electronic signal, and the cut sticks are collected by a collector downstream from the cutter, the transmission time of the signal and the mechanical response time of the cutter constituting an inherent cutter delay time, is characterized in that the arrival of the forward end of the strand at a first sensing point that is between the cutter and the collector activates the microprocessor to begin to count and store a first number of equally spaced time pulses; the arrival of the forward end of the strand at a second sensing point that is between the first sensing point and the collector, and is spaced from the first sensing point by a distance that is greater than the distance the strand travels during the cutter delay time, activates the microprocessor to begin to count and store a second number of equally spaced time pulses until the said second number of time pulses equals the difference between the said first number of time pulses and the number of time pulses that is equivalent to the said inherent cutter delay; when a signal is initiated that activates the cutter.

The method according to the invention can be summarized as a system that uses sensors to measure the speed of movement of a strand over a fixed increment to a fixed distance from a cutter that approximates the desired length of the cut part, and uses that measurement to determine the point beyond that fixed distance at which the strand must be cut to make its length independent of its speed of movement, thus producing cut sticks of constant length. The propellant extrusion rate may range, for example, between about 120 and 360 mm per second.

This invention is further described in reference to Figures 1, 1A and 2—4. Figures 1 and 1A are simplified views in perspective of apparatus 10 used in practice of this invention. Figure 1 shows extruder 12 extruding propellant strand 14 that is pneumatically conveyed by introduction of air into inlet 16. Figure 1A is an expanded view of cutter 18, conveyor 28 and plenum chamber 29. Figure 2 is a schematic of propellant strand 14, cutter 18 and sensors $P_0$ and $P_1$. Figure 3 graphically depicts in two interrelated graphs the relationship between propellant strand positions $P_0$, $P_1$ and $P_2$ and time. Figure 4 is a bar graph depicting the precision obtained in a practice of this invention.

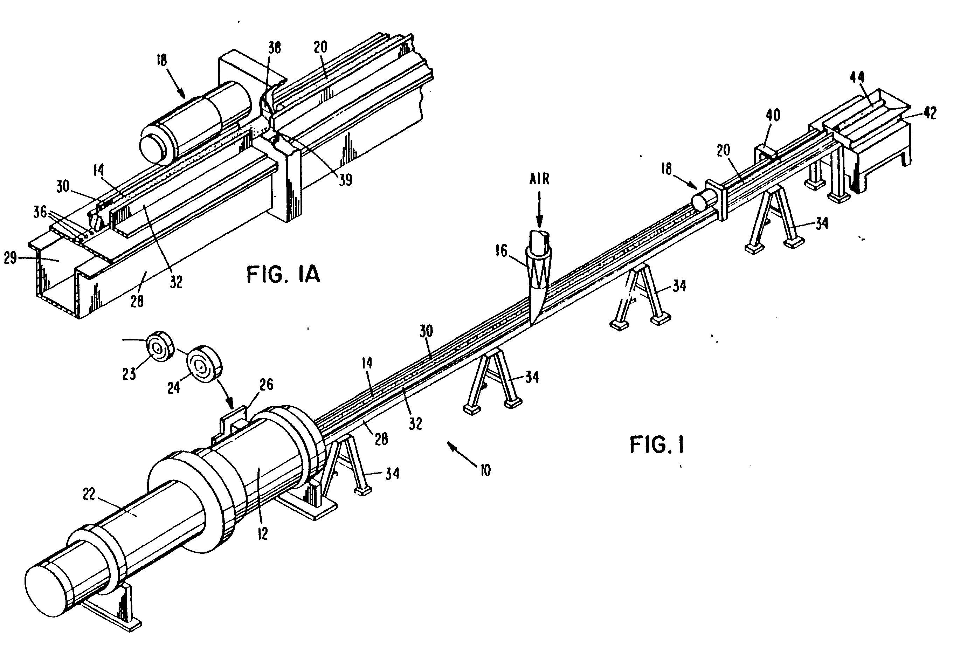

Referring to Figure 1, extruder 12 has a ram in housing 22 that extrudes a propellant strand 14 from previously prepared pieces in the form of so-called "carpet rolls", such as shown at 23, 24 as they are being fed into inlet 26 for extrusion. The propellant strand 14 exits a die orifice (not shown) at the end of extruder 12, travels through a short tube and then onto the pneumatic conveyor 28 between guides 30, 32. A suitable pneumatic conveyor is available from Jetstream Systems Company under the designation JETSTREAM$^R$. Air forced through inlet 16 into plenum chamber 29 of the conveyor provides a fluid carrier as the air exits orifices 36 (see Figure 1A), which are dispersed along the length of the conveyor to lift the propellant strand 14 as it moves to cutter 18. The pressure of air in chamber 29 is about 5 inches of water above atmosphere (1245 Pa gauge). In addition, the existing jets of air cool the propellant strand 14.

A DC (direct current servo motor cutter 18 is designed to cut through the propellant strand 14 when the motor is activated by a signal from a MM-10 microprocessor, available from Industrial Indexing Systems Company. The motor for the cutter 18 is available from Inland Motors Company as model TTR-2042-3010, with amplifier SM6015-22 to amplify the signal. A blade 38 is mounted on the shaft of the motor, and the MM-10 microprocessor is programmed to drive the motor through a single rotation of the shaft that provides the cutting action, with prescribed acceleration and maximum velocity and deceleration rates. Angular velocity and position feedback to the MM-10 microprocessor from a tachometer and a 2-pole resolver, respectively, ensure that the single revolution of blade 38 is repeatable without excessive deviation from the prescribed path.

The transmission time of the signal to activate the motor and the mechanical response time of the cutter produce an inherent cutter delay time between the initiation of the signal and the completion of the cutting action.

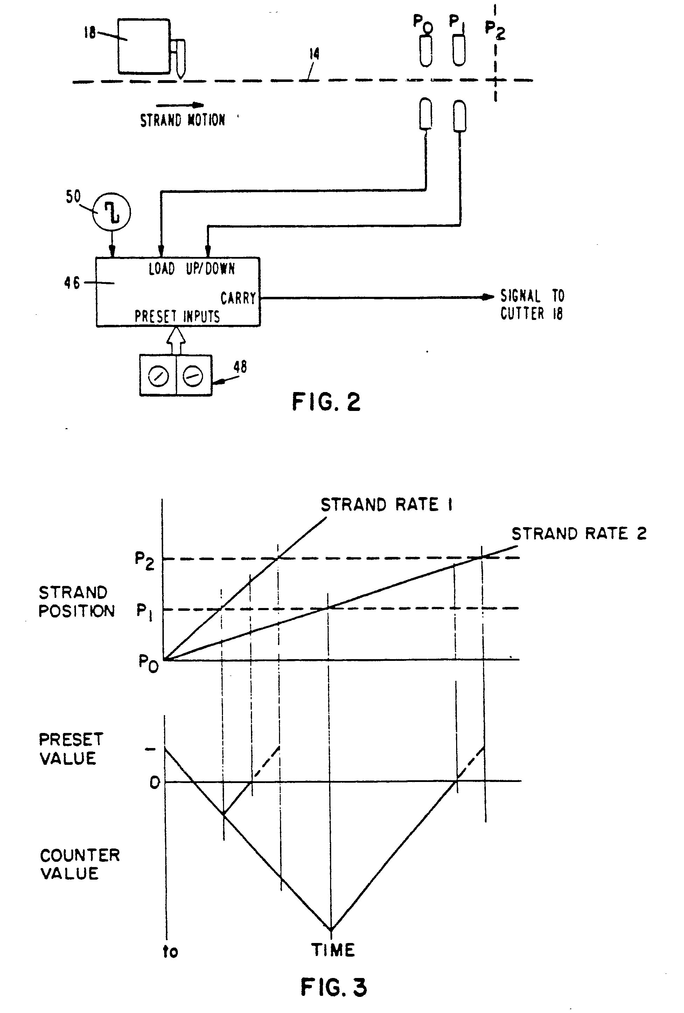

The sensing elements at $P_0$ and $P_1$ (see Figure 2) are carried by sensor housing and support 40 (Figure 1) and utilize non-contacting optical sensors, so that the propellant strand is detected without the possibility of product deformation or dangerous heat generation. The sensor locations $P_0$ and $P_1$ may be about 1.25—2.0 cm apart along the conveyor.

The output of sensors at $P_0$, $P_1$ is used to actuate a binary codes decimal (BCD) counter 46, connected to a precision oscillator 50 and digital circuitry 46, 48.

Figures 2 and 3 illustrate how this system compensates for strand rate variation. The symbols in these Figures have the meanings set forth in Table I below:

Table I

$P_0$=Position of first sensor
$P_1$=Position of second sensor
$P_2$=Desired strand length from cutter, and
$t_0$=Time until the propellant reaches $P_0$

Before the moving propellant strand reaches $P_0$, the counter 46 is initialized in its "load" mode, at an output value, preset by the binary rotary switches 48, that corresponds to the inherent cutter delay (which may be, for example, about 55 milliseconds). When the propellant reaches $P_0$, the load input is deactivated and the counter begins to count pulses from the precision oscillator 50. It counts down from the present value, becoming more negative in value until the propellant reaches $P_1$. At this point the count direction is reversed and the counter output value begins to increase toward zero. The counter output value will reach zero when the second count equals the difference between the first count and the number of time pulses that is equivalent to the present output value corresponding to the inherent cutter delay. At that moment, which will be in advance of the time when the propellant reaches $P_2$ as a result of that cutter delay, a signal is initiated for transmission to the cutter by the microprocessor. When the delay time expires, the leading end of the propellant strand 14 will approximately have reached $P_2$ regardless of the extrusion velocity, and the cut will be completed.

After propellant stick such as stick 20 in Figure 1 is cut, a transporter carries this stick 20 and subsequently cut sticks away from cutter 18. As shown in Figure 1, propellant sticks can be pneumatically conveyed after cutting and deposited in a bin 42. Preferably, this transporter is the same pneumatic conveyor as used in pneumatic conveyance of strand 14 prior to cutting. In this embodiment, the plenum chamber 29 extends the length of device 10. With solventless propellants, the cut sticks such as 44 are cooled sufficiently by the pneumatic conveyance so that they may be simply dropped into bin 42. Solvent propellants, however, may need special handling after they are cut into propellant sticks. Alternatively, a conveyor belt may be used to carry sticks from cutter 18.

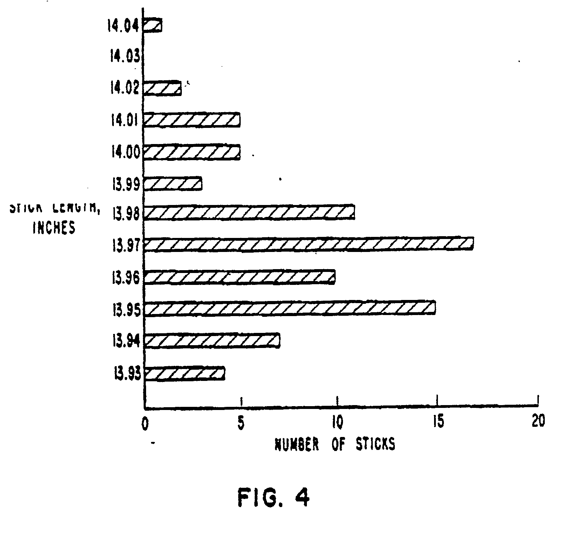

Figure 4 shows the results of utilizing a propellant stick manufacturing procedure such as described above. The 80 sticks in Figure 4 are nominally 14'' (35.56 cm) sticks with a standard deviation of between 0.020 and 0.0230 inches (0.508 and 0.5842 mm) and a mean length of 13.969 inches (35.481 cm). The stick has a diameter of about 0.248 inches (6.3 mm) and comprises by weight about 62.5% nitrocellulose, 36.7% diethyleneglycoldinitrate, 0.45% Akardite II (trade mark; a stabiliser, for tank-weapon ammunition, based on ethyl methyl urea), 0.25% Ethyl Centralite and 0.10% of graphite and magnesium oxide.

The automated stick propellant manufacturing apparatus of Figure 1 as described above may be arranged so that the die has many orifices through which a plurality of strands are extruded and laid in individual trays of a multiple track pneumatic conveyor. Each track preferably has a separate cutter and optical sensor combination.

The method of this invention is suitable for use in manufacture of stick propellant from solvent-type single, double and triple base propellants as well as solvent-less-type double and triple base propellants, from horizontal as well as vertical presses.

## Claims

1. A method for continuously conveying and cutting an extruded strand of a solid propellant to produce sticks of a desired length that is substantially independent of variations in strand velocity, in which the extruded strand is continuously conveyed past a microprocessor-controlled cutter that cuts the strand after it receives an electronic signal, and the cut sticks are collected by a collector downstream from the cutter, the transmission time of the signal and the mechanical response time of the cutter constituting an inherent cutter delay time, is characterized in that the arrival of the forward end of the strand at a first sensing point that is between the cutter and the collector activates the microprocessor to begin to count and store a first number of equally spaced time pulses; the arrival of the forward end of the strand at a second sensing point that is between the first sensing point and the collector, and is spaced from the first sensing point by a distance that is greater than the distance the strand travels during the cutter delay time, activates the microprocessor to begin to count and store a second number of equally spaced time pulses until the said second number of time pulses equals the different between the said first number of time pulses and the number of time pulses that is equivalent to the said inherent cutter delay; when a signal is initiated that activates the cutter.

2. A method for conveying and cutting an extruded propellant strand as claimed in claim 1, further characterized in that the first and second sensing points are spaced about 1.25—2.0 cm apart.

3. A method for conveying and cutting an extruded propellant strand as claimed in claim 1 or 2, further characterized in that the propellant extrusion rate is between about 120 and 360 mm per second.

## Patentansprüche

1. Verfahren zum kontinuierlichen Fördern und Schneiden eines extrudierten Stranges aus einem Festtreibstoff, um Stangen einer Soll-Länge zu erzeugen, das im wesentlichen unabhängig von Veränderungen in der Stranggeschwindigkeit ist, wobei der extrudierte Strang kontinuierlich gefördert wird an einer mikroprozessorgeregelten Schneidvorrichtung vorbei, die den Strang nach Empfang eines elektronischen Signals schneidet, und die geschnittenen Stücke gesammelt werden durch einen Sammler, der der Schneidvorrichtung nachgeschaltet ist, und worin die Signalübertragungszeit und die mechanische Antwortzeit der Schneidvorrichtung eine inhärente Schneidvorrichtungsverzögerungszeit aufbauen, dadurch gekennzeichnet, daß die Ankunft des vorderen Strangendes an einem ersten Meßpunkt, der zwischen der Schneidvorrichtung und dem Sammler liegt, den Mikroprozessor veranlaßt zu zählen zu beginnen und eine erste Anzahl gleichlanger Zeitimpulse zu speichern; die Ankunft des vorderen Strangendes an einem zweiten Meßpunkt, der zwischen dem ersten Meßpunkt und dem Sammler liegt und von dem ersten Meßpunkt mit einem Abstand angeordnet ist, der größer ist als die Entfernung, die der Strang während der Schneidvorrichtungsverzögerungszeit zurücklegt, den Mikroprozessor veranlaßt zu zählen zu beginnen und eine zweite Anzahl von gleichlangen Zeitimpulsen zu speichern, bis diese zweite Anzahl Zeitimpulse dem Unterschied zwischen der ersten Anzahl Zeitimpulse und der Anzahl von Zeitimpulsen, die zu der inhärenten Schneidvorrichtungsverzögerung äquivalent ist, gleichkommt; wenn ein Signal initiiert wird, die Schneidvorrichtung in Gang gesetzt wird.

2. Verfahren zum Fördern und Schneiden eines extrudierten Treibstoffstranges nach Anspruch 1, weiter dadurch gekennzeichnet, daß die ersten und zweiten Meßpunkte mit einem Zwischenraum von ungefähr 1,25—2,0 cm angeordnet werden.

3. Verfahren zum Fördern und Schneiden eines extrudierten Treibstoffstranges nach Anspruch 1 oder 2, weiter dadurch gekennzeichnet, daß die Treibstoffextrusionsgeschwindigkeitsrate zwischen ungefähr 120 und 360 mm pro Sekunde liegt.

## Revendications

1. Procédé pour transporter et découper d'une manière continue un cordon extrudé d'un agent de propulsion solide afin de produire des bâtons ayant une longueur désirée qui est pratiquement indépendante des variations de la vitesse du cordon, dans lequel le cordon extrudé est transporté d'une manière continue en regard d'un couteau, commandé par un microprocesseur, qui découpe le cordon après avoir reçu un signal électronique, et les bâtons découpés sont recueillis par un collecteur se trouvant en aval du couteau, le temps de transmission du signal et le temps de réponse mécanique du couteau constituant une période de retard inhérente au couteau, caractérisé en ce que l'arrivée de l'extrémité antérieure du cordon en un premier point de détection se trouvant entre le coûteau et le collecteur active le microprocesseur de manière qu'il commence à compter et à stocker des impulsions de temporisation régulièrement espacées les unes des autres, l'arrivée de l'extrémité antérieure du cordon en un second point de détection qui se trouve entre le premier point de détection et le collecteur et qui est espacé du premier point de détection d'une distance supérieure à la distance dont le cordon se déplace pendant la période de retard du couteau, active le microprocesseur de manière que celui-ci commence à compter et à stocker un second nombre d'impulsions de temporisation également espacées les unes des autres jusqu'à ce que ce second nombre d'impulsions de temporisation soit égal à la différence entre le premier nombre d'impulsions de temporisations et le nombre d'impulsions de temporisation qui est équivalent à la période de retard inhérente du coûteau, lorsqu'un signal est émis pour actionner le couteau.

2. Procédé pour transporter et découper d'une manière continue un cordon extrudé d'un agent de propulsion suivant la revendication 1 caractérisé en ce que les premier et second points de détection sont séparés l'un de l'autre d'une distance allant d'environ 1,25 à 2,0 cm.

3. Procédé pour transporter et découper d'une manière continue un cordon extrudé d'un agent de propulsion suivant l'une quelconque des revendications 1 ou 2 caractérisé en ce que la vitesse d'extrusion de l'agent de propulsion est comprise entre environ 120 et 360 millimètres par seconde.

FIG. 1

FIG. 1A

18

14

STRAND MOTION

$P_0$ $P_1$ $P_2$

50

46

LOAD UP/DOWN

CARRY → SIGNAL TO CUTTER 18

PRESET INPUTS

48

FIG. 2

STRAND RATE 1

STRAND RATE 2

$P_2$

STRAND POSITION

$P_1$

$P_0$

PRESET VALUE

−

0

COUNTER VALUE

$t_0$

TIME

FIG. 3

FIG. 4